# EUROPEAN PATENT APPLICATION

(11) **EP 4 831 447 A2**
(43) Date of publication of application: **28.10.2026**
(21) Application number: 26171982.7
(22) Date of filing: 13.04.2026
(51) Int. Cl.: F01D 11/00, F01D 5/22, F01D 5/30

(54) **COMBUSTION GAS LEAKAGE PREVENTION DEVICE FOR TURBINE BLADE, AND GAS TURBINE**

(30) Priority: 24.04.2025 KR 20250053514
(71) Applicant: Doosan Enerbility Co., Ltd., Seongsan-gu Changwon-si, Gyeongsangnam-do 51711 (KR)
(72) Inventor: JU, Jaemin, 51170 Changwon-si (KR); KIM, Kibaek, 17066 Yongin-si (KR)
(74) Representative: Ter Meer und Partner mbB

(57) **Abstract**

A combustion gas leakage prevention device for a turbine blade (190) includes a first damper pin (10a), a second damper pin (10b) and a third damper pin (10c).
The first damper pin (10a) is disposed between a platform (192) and a shank part (197) of the turbine blade (190) to extend lengthwise along an axial direction and inserted into a pin slot (1). The second damper pin (10b) and the third damper pin (10c) are each disposed below opposite sides of the first damper pin (10a), and inserted into a respective pin slot (1). Damper side seal plates (194) are respectively disposed below the second damper pin (10b) and the third damper pin (10c).
The second damper pin (10b) and the third damper pin (10c) each include a body part (11) having a hollow portion (11a) and a curved extending part (12) extending outward from circumferential surfaces of opposite ends of the body part (11). The curved extending part (12) includes a cutaway recess portion (12a) into which a contact end of the first damper pin (10a) at one side and a contact end of the respective damper side seal plate (194) at an opposite side are inserted.
A gas turbine (100) includes a compressor (110) configured to suction and compress external air, a combustor (120) configured to mix fuel with the air compressed by the compressor (110) and combust a mixture, and a turbine (130), in which turbine blades (190) and turbine (130) vanes are mounted in an interior of a turbine casing (150), the turbine blades (190) being rotated by combustion gas discharged from the combustor (120). The gas turbine (100) further includes at least a combustion gas leakage prevention device for a turbine blade (190) of the turbine blades (190).

## Description

This application claims the benefit of priority to Korean Patent Application No. 10-2025-0053514, filed in the Korean Intellectual Property Office on April 24, 2025.

### TECHNICAL FIELD

The present disclosure relates to a combustion gas leakage prevention device of a turbine blade and a gas turbine including the same, and more particularly, to a combustion gas leakage prevention device of a turbine blade and a gas turbine including the same, in which a damper pin is provided along a peripheral portion of a shank part of the turbine blade so that leakage of combustion gas may be minimized.

### BACKGROUND

Generally, a turbine is a mechanical apparatus that obtains a rotational force with impulse force or reaction force by using a flow of a compressible fluid, such as steam or gas, and examples thereof include a steam turbine using steam and a gas turbine using high-temperature combustion gas.

A gas turbine is configured to convert thermal energy into mechanical energy by injecting high-temperature and high-pressure combustion gas that is generated by burning a mixture of high-pressure compressed air compressed by a compressor, and fuel, into a turbine to rotate the turbine.

More specifically, a gas turbine includes a compressor that compresses air, a combustor that burns compressed air supplied from the compressor and fuel to generate combustion gas, and a turbine that rotates a rotor by means of turbine blades that are rotated by high-temperature and high-pressure combustion gas discharged from the combustor.

The gas turbine has a plurality of turbine vanes and turbine blades that are alternately disposed in a turbine casing. Furthermore, a rotor is disposed to pass through central portions of the compressor, the combustor, the turbine, and an exhaust chamber.

Opposite ends of the rotor are rotatably supported by bearings. Furthermore, a plurality of disks are fixed to the rotor, and the respective blades are connected thereto, and a drive shaft, such as a power generator, is connected to an end of the exhaust chamber.

The gas turbine does not have a reciprocating mechanism such as pistons of a four-stroke engine, and thus, there are no mutual frictional portions, such as a piston and a cylinder, resulting in extremely low consumption of lubricating oil, significantly reduced vibration characteristic of reciprocating machines, and high-speed operation.

Vibration may occur in the turbine blade during operation of the engine. For example, when a fluctuation occurs in a flow of high-temperature combustion gas or steam, a change in the flow of the combustion gas or steam causes the turbine blade to vibrate.

Accordingly, in design of a gas turbine, particularly in design of the turbine, it is necessary to control high-cycle fatigue of the turbine blade by avoiding or minimizing dynamic stress caused by resonance at a natural frequency of the turbine blade, forced response, or aero-elastic instabilities.

In order to improve a high-cycle fatigue life of the turbine blade as described above, a plurality of damper pins spaced apart from each other along a peripheral portion of a shank part of the turbine blade are generally installed so that a vibration response may be reduced through contact with an adjacent turbine blade when vibration occurs.

However, combustion gas discharged from the combustor is supplied to the turbine and collides with the turbine blade to generate rotational torque, and because the damper pins for vibration damping are disposed to be spaced apart from each other along a circumference of the shank part of the turbine blade, leakage of combustion gas occurs through gaps formed between the damper pins.

### SUMMARY

The present disclosure has been made to solve the above-mentioned problems occurring in the prior art while advantages achieved by the prior art are maintained intact.

An aspect of the present disclosure provides a combustion gas leakage prevention device of a turbine blade and a gas turbine, in which curved extending parts are formed at opposite ends of a vertical damper pin among a transverse damper pin and the vertical damper pin formed along a circumferential surface of a shank part of the turbine blade and contact opposite ends of the transverse damper pin to achieve sealing, thereby not only minimizing leakage of combustion gas but also reducing vibration response.

Objects of the present disclosure are not limited to the above-mentioned object, and other objects and advantages of the present disclosure that are not mentioned will be understood from the following description, and will be apparent from understood from an embodiment of the present disclosure. In addition, it will be easily understood that the objects and advantages of the present disclosure are realized by means and combinations described in the appended claims.

To achieve the objects, the present disclosure provides a combustion gas leakage prevention device of a turbine blade including a first damper pin disposed between a platform and a shank part of the turbine blade to extend lengthwise along an axial direction, and inserted into a pin slot, a second damper pin and a third damper pin disposed below opposite sides of the first damper pin, respectively, and inserted into the pin slot, and a retainer plate disposed below the second damper pin and the third damper pin.

In the combustion gas leakage prevention device of the turbine blade, curved extending parts are formed at opposite ends of the vertical damper pins among a first damper pin, which is a transverse damper pin formed along a circumferential surface of a shank part of the turbine blade, and second and third damper pins, which are vertical damper pins, and contact opposite ends of the transverse damper pin to achieve sealing, thereby not only reducing vibration response through contact with an adjacent turbine blade when vibration occurs but also minimizing leakage of combustion gas.

To this end, the second damper pin and the third damper pin each may include a body part having a hollow portion, and a curved extending part extending outward from circumferential surfaces of opposite ends of the body part, and the curved extending part may include a cutaway recess portion into which a contact end of the first damper pin at one side and a contact end of the damper side seal plate at an opposite side are inserted.

According to the present disclosure, the body part may include at least one of an annular cross-sectional shape perpendicular to a lengthwise direction, or a C-shaped cross-sectional shape having a cutaway portion formed along the lengthwise direction and perpendicular to the lengthwise direction.

According to the present disclosure, the body part may include an upper curved portion contacting the turbine blade, and a lower curved portion formed at one side of the upper curved portion and inserted into the pin slot.

According to the present disclosure, the curved extending part may have an arc-shaped cross-sectional shape.

According to the present disclosure, the cutaway recess portion may include a first cutaway portion contacting vertical ends of the first damper pin and a retainer plate, and cut away in a direction corresponding to a lengthwise direction of the body part, and a second cutaway portion contacting horizontal ends of the first damper pin and the retainer plate, and cut away in a direction crossing the direction corresponding to the lengthwise direction of the body part.

According to the present disclosure, the combustion gas leakage prevention device may include an auxiliary damper pin inserted into a hollow portion of at least one of the second damper pin and the third damper pin.

According to the present disclosure, the auxiliary damper pin may be formed smaller than an inner diameter of at least one of the second damper pin and the third damper pin.

According to the present disclosure, the second damper pin, the first damper pin, and the third damper pin may be continuously arranged along a peripheral portion of the shank part.

According to the present disclosure, the first damper pin may be disposed between the platform and the shank part to extend lengthwise in the axial direction, and the second damper pin and the third damper pin may be disposed below opposite sides of the first damper pin in directions crossing each other.

According to the present disclosure, a gas turbine includes a compressor that suctions and compresses external air, a combustor that mixes fuel with the air compressed by the compressor and combusts a mixture, a turbine, in which turbine blades and turbine vanes are mounted in an interior of a turbine casing, the turbine blades being rotated by combustion gas discharged from the combustor, a first damper pin disposed between a platform and a shank part of the turbine blade to extend lengthwise along an axial direction, and inserted into a pin slot, a second damper pin and a third damper pin disposed below opposite sides of the first damper pin, and inserted into the pin slot, and a retainer plate disposed below the second damper pin and the third damper pin, the second damper pin and the third damper pin each include a body part having a hollow portion, and a curved extending part extending outward from circumferential surfaces of opposite ends of the body part, and the curved extending part includes a cutaway recess portion into which a contact end of the first damper pin at one side and a contact end of the retainer plate at an opposite side are inserted.

### BRIEF DESCRIPTION OF THE DRAWINGS

The above and other objects, features and advantages of the disclosure will be more apparent from the following detailed description taken in conjunction with the accompanying drawings:
FIG.1 a view illustrating a schematic structure of a gas turbine of an embodiment of the disclosure;
FIG. 2 is a perspective view illustrating an overall structure of a turbine blade according to an embodiment of the present disclosure;
FIG. 3 is a perspective view illustrating a damper pin of an embodiment of the present disclosure;
FIG. 4 is a perspective view illustrating a damper pin inserted into a pin slot of the turbine blade of FIG. 2;
FIG. 5 is a cross-sectional view illustrating an installation state of a damper pin between adjacent turbine blades according to an embodiment of the present disclosure;
FIG. 6 is a cross-sectional view illustrating an installation state of a damper pin between adjacent turbine blades according to an embodiment of the present disclosure;
FIG. 7 is a perspective view illustrating a damper pin and an auxiliary damper pin according to an embodiment of the present disclosure; and
FIG. 8 is a cross-sectional view illustrating a state in which an auxiliary damper pin is inserted into a damper pin according to an embodiment of the present disclosure.

### DETAILED DESCRIPTION

Hereinafter, some embodiments of the disclosure will be described in detail with reference to the accompanying drawings. In adding reference numerals to the components of the drawings, it should be noted that the same components have the same numerals as possible even when they are illustrated on different drawings. In describing embodiments of the present disclosure, detailed descriptions associated with well-known functions or configurations will be omitted if they may make subject matters of the present disclosure unnecessarily obscure.

Furthermore, in describing components of embodiments of the present disclosure, the terms first, second, A, B, (a), (b), and the like may be used herein. These terms are only used to distinguish one component from another component, but do not limit the corresponding components irrespective of the nature, order, or priority of the corresponding components. When it is described that a certain component is "connected to", "coupled to" or "electrically connected to" a second component, it should be understood that the component may be directly connected or electrically connected to the second component, but a third component may be "connected", "coupled" or "electrically connected" between the components.

Hereinafter, embodiments of the disclosure will be described in detail with reference to accompanying drawings.

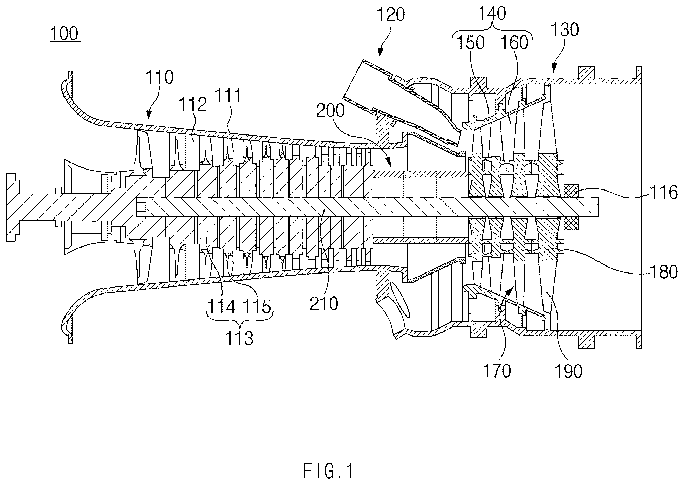

FIG. 1 is a view illustrating a schematic structure of a gas turbine of an embodiment of the disclosure. Referring to FIG. 1, a gas turbine 100 according to the disclosure includes a compressor 110, a combustor 120, and a turbine 130. With respect to a flow direction of gas (compressed air or combustion gas), the compressor 110 is disposed on an upstream side of the gas turbine 100 and the turbine 130 is disposed on a downstream side thereof. Furthermore, the combustor 120 is disposed between the compressor 110 and the turbine 130.

The compressor 110 accommodates a compressor vane 112 and a compressor rotor 113 in an interior of a compressor casing 111. The turbine 130 accommodates a turbine vane 160 and a turbine rotor 170 in an interior of the turbine casing 150. The compressor vane 112 and the compressor rotor 113 are arranged in multiple stages along a flow direction of compressed air, and the turbine vane 160 and the turbine rotor 170 are also arranged in multiple stages along a flow direction of combustion gas. In this case, the compressor 110 is designed such that an interior space thereof is reduced from a front stage toward a rear stage so that intake air may be compressed, and conversely the turbine 130 is designed such that the interior space thereof is expanded from the front stage toward the rear-stage so that combustion gas supplied from the combustor 120 may be expanded.

Meanwhile, a torque tube 200 that is a torque transmission member for transmitting rotational torque generated in the turbine 130 to the compressor 110 is disposed between the compressor rotor 113 located at a rearmost end side of the compressor 110 and the turbine rotor 170 located at a frontmost end side of the turbine 130. The torque tube 200 may include a plurality of torque tube disks (not illustrated) that form a total of three stages, as illustrated in FIG. 1, but this is merely one of various embodiments of the present disclosure, and the torque tube 200 may also include a plurality of torque tube disks that form four or more stages or two or fewer stages.

The compressor rotor 113 includes a compressor disk 114 and a compressor blade 115. In an interior of the compressor casing 111, a plurality of compressor disks 114 (for example, fourteen disks) are provided, and the compressor disks 114 are fastened by a tie rod 210 so as not to be spaced apart in an axial direction. More specifically, the compressor disks 114 are aligned with each other along the axial direction while centers thereof are passed through by the tie rod 210. Furthermore, the adjacent compressor disks 114 are disposed such that facing surfaces thereof are pressed by the tie rod 210 so that the compressor disks 114 may not be rotated relative to each other.

A plurality of compressor blades 115 are radially coupled to an outer peripheral surface of the compressor disk 114. Furthermore, a plurality of compressor vanes 112 that are installed annularly on an inner peripheral surface of the compressor casing 111 are disposed between the compressor blades 115 with respect to the same stage. The compressor vane 112 is maintained in a fixed state not to be rotated unlike the compressor disk 114, and serves to guide compressed air to the compressor blade 115 located on a downstream side by aligning flows of the compressed air that has passed through the compressor blade 115. In this case, the compressor casing 111 and the compressor vane 112 may be defined by a comprehensive name, compressor stator (stator), for distinguishing them from the compressor rotor 113.

The tie rod 210 is disposed to pass through a central portion of the compressor disks 114 and a turbine disk 180 that will be described later, and one end thereof is fastened to the compressor disk 114 located at a frontmost end of the compressor 110 and an opposite end thereof is fastened by the fixing nut 116.

A shape of the tie rod 210 may have various structures depending on the gas turbine 100, and is not necessarily limited to the shape illustrated in FIG. 1. That is, as illustrated, a single tie rod 210 may have a form that passes through a central portion of the compressor disk 114 and the turbine disk 180, a plurality of tie rods 210 may have a form that is disposed along a circumferential direction, and a combination thereof may also be applied.

Although not illustrated, a deswirler that serves as a guide vane may be installed in the compressor 110 of the gas turbine 100 for increasing a pressure of a fluid and aligning a flow angle of the fluid entering an inlet of the combustor 120 with a design flow angle.

In the combustor 120, the introduced compressed air is mixed with fuel and combusted to generate combustion gas having high energy, high temperature, and high pressure, and a temperature of the combustion gas is increased up to a heat-resistant limit that the combustor 120 and the turbine 130 may withstand through a constant-pressure combustion process.

The combustor 120 that constitutes a combustion system of the gas turbine 100 may be arranged in plural in a casing formed in a cell shape, and may include a burner that includes a fuel injection nozzle and the like, a combustor liner that forms a combustion chamber, and a transition piece that becomes a connection part between the combustor 120 and the turbine 130.

Specifically, the liner may provide a combustion space, in which fuel that is injected by a fuel injection nozzle is mixed with compressed air of the compressor 110 and is combusted. Such a liner may include a flame tube that provides a combustion space, in which fuel mixed with air is combusted, and a liner annular passage that forms an annular space while surrounding the flame tube.

Furthermore, a fuel nozzle may be coupled to a front end of the liner, and an igniter may be coupled to a side surface of the liner.

Meanwhile, a transition piece is connected to a rear end of the liner for sending combustion gas to the turbine 130. Like the liner, the transition piece has an outer wall part that is cooled by compressed air supplied from the compressor 110 so that damage caused by a high temperature of combustion gas may be prevented.

For this purpose, the transition piece is provided with cooling holes for injecting air into an interior thereof, and the compressed air cools a body located in the interior through the cooling holes and then flows toward the liner.

Meanwhile, high-temperature and high-pressure combustion gas that is discharged from the combustor 120 is supplied to the turbine 130. The high-temperature and high-pressure combustion gas that is supplied to the turbine 130 is expanded while passing through an interior of the turbine 130, and collides with the turbine blades 190 to provide a reaction force, thereby generating rotational torque. The rotational torque obtained as described above is transmitted to the compressor 110 through the torque tube 200, and power that exceeds power required to drive the compressor 110 may be used to drive a power generator and the like.

The turbine 130 is basically similar in structure to the compressor 110. That is, the turbine 130 is also provided with a plurality of turbine rotors 170 that are similar to the compressor rotor 113 of the compressor 110. Accordingly, the turbine rotor 170 also includes the turbine disk 180 and a plurality of turbine blades 190 that are disposed radially from the turbine disk 180.

A plurality of turbine vanes 160 that are installed annularly on the turbine casing 150 are also provided between the turbine blades 190 with respect to the same stage, and the turbine vanes 160 guide a flow direction of combustion gas that has passed through the turbine blades 190. In this case, the turbine casing 150 and the turbine vane 160 may also be defined by a comprehensive name, turbine stator 140, for distinguishing them from the turbine rotor 170.

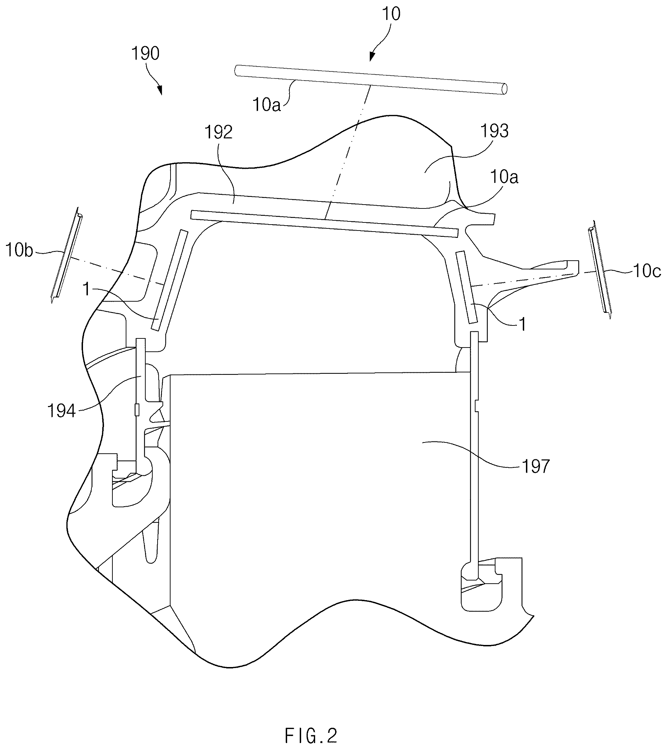

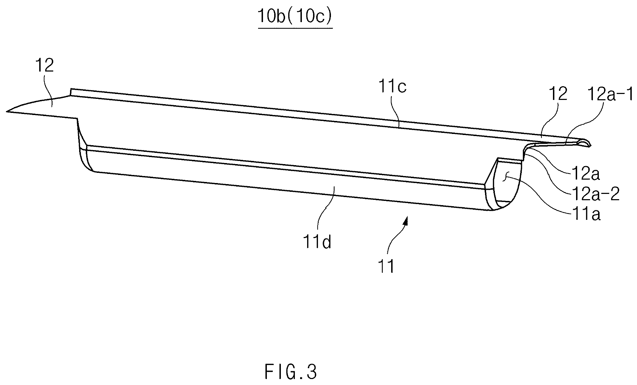

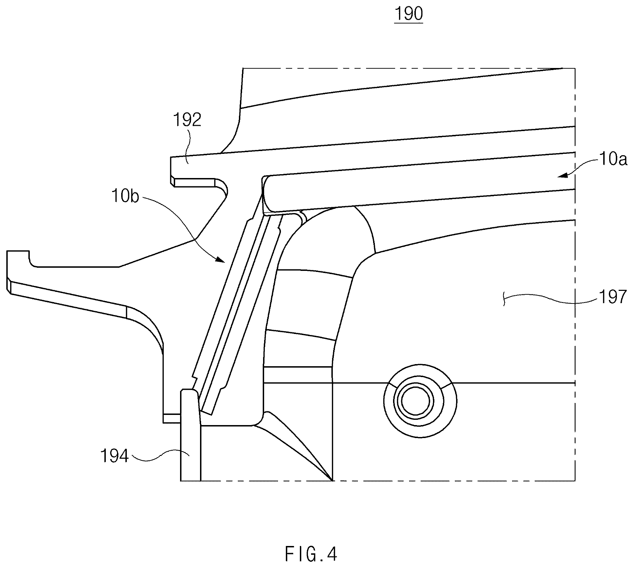

FIG. 2 is a perspective view illustrating an overall structure of a turbine blade according to an embodiment of the present disclosure, FIG. 3 is a perspective view illustrating a damper pin according to an embodiment of the present disclosure, FIG. 4 is a perspective view illustrating the damper pin inserted into a pin slot of the turbine blade of FIG. 2, and FIGS. 5 and 6 are cross-sectional views illustrating an installation state of the damper pin between adjacent turbine blades according to an embodiment of the present disclosure.

The turbine disk 180 has a disk shape, and a plurality of turbine disk slots (not illustrated) are formed on an outer peripheral surface thereof.

Referring to FIG. 2, a turbine blade 190 may be installed on a radially outer side of the turbine disk 180. The turbine blade 190 may include a root member (not illustrated) that is coupled to the turbine disk slot, a platform 192 that is coupled to a radially outer side of the root member, and an airfoil 193 that is coupled to a radially outer side of the platform 192 to be rotated by combustion gas.

Furthermore, the platform 192 serves to maintain gaps between the turbine blades 190 while a side surface thereof contacts the platforms 192 of other adjacent turbine blades 190.

A root member that is fastened to the turbine disk slot is provided on a bottom surface of the platform 192. The root member is formed to correspond to a shape of a curved surface formed in the turbine disk slot, which may be selected depending on a required structure of the gas turbine 100, and may have a generally known dovetail shape or fir-tree shape.

A fastening type of the root member includes a tangential type that is inserted into the turbine disk slot along a tangential direction of an outer peripheral surface of the turbine disk 180, and an axial type that is inserted into the turbine disk slot along the axial direction of the turbine disk 180. In some cases, the turbine blade 190 may be fastened to the turbine disk 180 by using other fastening devices than the shapes described above, for example, fixtures such as a key or a bolt.

An airfoil 193 is provided on an upper surface of the platform 192. The airfoil 193 is formed to have an airfoil shape that is optimized according to specifications of the gas turbine 100, and has a leading edge that is disposed on an upstream side and a trailing edge that is disposed on a downstream side with respect to a flow direction of combustion gas.

Here, unlike the compressor blade 115, the turbine blade 190 comes into direct contact with high-temperature and high-pressure combustion gas. Because a temperature of the combustion gas is as high as about 1700°C, a cooling means is required. For this purpose, an additional passage (not illustrated) for supplying compressed air to the turbine blade 190 by extracting compressed air from a portion of the compressor 110 is provided.

The additional passage may extend from an outside of the casing, may extend while passing through an interior of the compressor disk 114, or both an external passage and an internal passage may be used. A plurality of film cooling holes (not illustrated) may be formed on a surface of the airfoil 193, and the film cooling holes communicate with a cooling passage (not illustrated) formed in an interior of the airfoil 193 to supply compressed air to the surface of the airfoil 193.

Referring to FIG. 2, the turbine blades 190 are installed to be adjacent to each other in the circumferential direction of the turbine disk 180, and a plurality of pin slots 1 are formed on a platform 192 of one turbine blade 190 and a corresponding surface of an adjacent platform 192.

With respect to the platform 192, a plurality of pin slots 1 are formed below the platform 192, and a shank part 197 that provides a flow space of cooling air is formed.

The plurality of pin slots 1 are formed below the platform 192 along an axial direction of the gas turbine 100, and corresponding pin slots 1 are also formed below the platform 192 of another turbine blade 190 that is adjacent along a circumferential direction on the turbine disk 180. A damper pin 10 may be inserted into a pin slot 1.

The damper pin 10 may serve to reduce vibration energy through contact with another adjacent turbine blade 190 when vibration occurs in the turbine blade 190 during operation of the gas turbine 100.

As illustrated in FIG. 2, the damper pin 10 includes a first damper pin 10a that is disposed to extend lengthwise along the axial direction between the platform 192 and the shank part 197. The first damper pin 10a is a transverse damper pin that extends long in a transverse direction along the platform 192.

Furthermore, the damper pin 10 may include a second damper pin 10b and a third damper pin 10c that are disposed in crossing directions below opposite sides of the first damper pin 10a.

Here, directions crossing each other below opposite sides of the first damper pin 10a may be defined as directions that are arranged upward and downward with respect to an extension direction of the first damper pin 10a. Accordingly, the second damper pin 10b and the third damper pin 10c may be disposed along directions having upward and downward components with respect to the first damper pin 10a. However, this is a relative direction with respect to an extension direction of the first damper pin 10a, and the upward/downward direction does not necessarily mean a vertical direction. That is, the second damper pin 10b and the third damper pin 10c may extend in directions that are inclined with respect to the first damper pin 10a, may be disposed to diverge downward from outer portions of the first damper pin 10a, and may be formed to protrude outward from the two points, respectively.

The first damper pin 10a to the third damper pin 10c are disposed while being inserted into the pin slot 1 along a peripheral portion of the shank part 197, thereby achieving a sealing effect through a space between one platform 192 and another adjacent platform 192.

Referring to FIG. 4, the damper pin 10 is also installed at a corresponding position below the platform 192 of another turbine blade 190 that is adjacent along the circumferential direction on the turbine disk 180. As described above, as the damper pin 10 provided in the turbine blade 190 protrudes toward a facing surface of an adjacent turbine blade 190 and may surface-contact it, a vibration response of the turbine blade 190 may be reduced.

The pin slot 1 according to an embodiment of the present disclosure has a slot structure that is concave in a semicircular shape such that the damper pin 10 having a circular cross section is inserted thereinto and has a length corresponding to the damper pin 10. When the damper pin 10 is inserted into the pin slot 1, the damper pin 10 may not be easily separated from the pin slot 1.

As illustrated in FIG. 3, the damper pin 10 according to an embodiment of the present disclosure not only includes a configuration installed at opposite sides of the first damper pin 10a, which is a transverse damper pin, for reducing a vibration response, but also includes a second damper pin 10b and a third damper pin 10c for preventing leakage of combustion gas.

Accordingly, for the damper pin 10 according to an embodiment of the present disclosure, the second damper pin 10b and the third damper pin 10c will be mainly described.

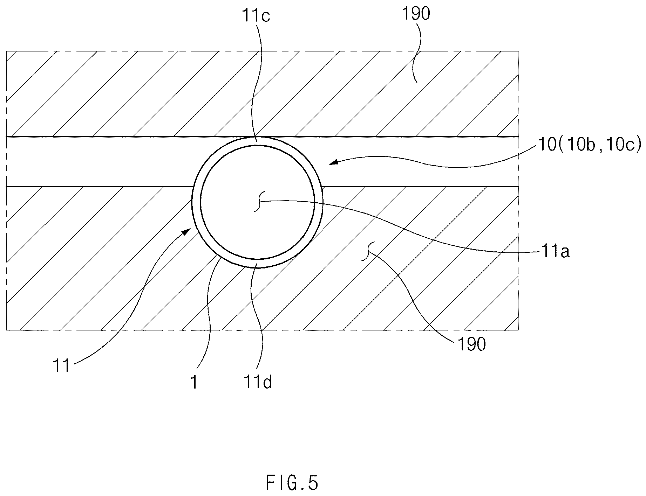

As illustrated in FIG. 5, the second damper pin 10b and the third damper pin 10c according to an embodiment of the present disclosure include a body part 11 that has a hollow portion 11a having an empty interior and has an annular cross-sectional shape that is perpendicular to a lengthwise direction.

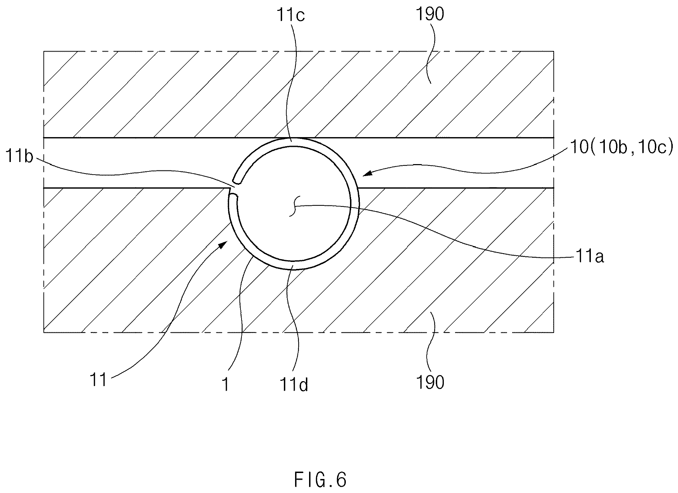

As illustrated in FIG. 6, the second damper pin 10b and the third damper pin 10c according to another embodiment of the present disclosure include a body part 11, one side of which has a cutaway portion 11b cut away in the lengthwise direction and that has a C-shaped cross-sectional shape that is perpendicular to the lengthwise direction.

Referring to the accompanying drawings, the damper pin 10 including the second damper pin 10b and the third damper pin 10c not only reduces vibration response through contact with an adjacent turbine blade 190 when vibration occurs, but also acts as a flow resistance to combustion gas to prevent leakage of the combustion gas.

The body part 11 is a portion that exhibits a damping effect for lowering vibration response, and is formed to extend in the lengthwise direction.

The body part 11 may adopt an annular cross-sectional structure or a C-shaped cross-sectional shape in consideration of damping characteristics, but is not limited thereto and may be variously modified.

However, the body part 11 may be limited to a structure having a damping performance for lowering vibration response through contact with an adjacent turbine blade 190, and in an embodiment of the present disclosure may include an annular cross-sectional shape and a C-shaped cross-sectional shape.

Furthermore, the body part 11 includes a curved extending part 12 for blocking a passage of combustion gas so that the body part 11 may act as a flow resistance to the combustion gas.

The curved extending part 12 may include an arc-shaped cross section that extends outward by a predetermined length from circumferential surfaces of opposite ends of the body part 11 with respect to the opposite ends of the body part 11. That is, the curved extending part 12 may be an extending portion that extends outward from an upper curved portion 11c of the body part 11 that will be described later.

Furthermore, the body part 11 includes a lower curved portion 11d that is formed at one side of the upper curved portion 11c and has a U-shaped cross-sectional shape inserted into and fixed in the pin slot 1 having a groove shape.

The body part 11 does not include the curved extending part 12, and may be a cylindrical portion excluding the curved extending part 12.

The upper curved portion 11c may be a contact surface that contacts an adjacent turbine blade 190. The upper curved portion 11c may contact an adjacent turbine blade 190 to reduce vibration response.

As described above, the curved extending part 12 may be a U-shaped portion that extends integrally outward from opposite ends of the body part 11. The curved extending part 12 may be a portion, one end of which contacts an end of the first damper pin 10a and an opposite end of which contacts a retainer plate 194 mounted on the turbine blade 190.

A cutaway recess portion 12a, into which a contact end contacting the first damper pin 10a and a contact end contacting the retainer plate 194 are inserted, may be formed in the curved extending part 12.

Here, ends of the first damper pin 10a and the retainer plate 194 have a rectangular cross-sectional structure in which a vertical end having a relatively short length and a horizontal end having a relatively longer length than the vertical end are formed.

A portion of the cutaway recess portion 12a contacts the horizontal end of each of the first damper pin 10a and the retainer plate 194, and another portion of the cutaway recess portion 12a contacts the vertical end of each of the first damper pin 10a and the retainer plate 194, so that leakage of combustion gas may be blocked in a state in which they do not interfere with each other.

The cutaway recess portion 12a includes a first cutaway portion 12a-1 that contacts the vertical end of each of the first damper pin 10a and the retainer plate 194 and is cut away in a direction corresponding to the lengthwise direction of the body part 11.

The cutaway recess portion 12a further includes a second cutaway portion 12a-2 that contacts the horizontal end of each of the first damper pin 10a and the retainer plate 194 and is cut away in a direction crossing a direction corresponding to the lengthwise direction of the body part 11.

That is, the first cutaway portion 12a-1 and the second cutaway portion 12a-2 of the cutaway recess portion 12a, at which the horizontal end and the vertical end of each of the first damper pin 10a and the retainer plate 194 meet each other, may be formed to cross each other.

In this manner, the second damper pin 10b and the third damper pin 10c, in which the curved extending part 12 is installed, may be disposed in directions that cross each other with respect to the first damper pin 10a.

The cutaway recess portions 12a of the curved extending parts 12 formed in the second damper pin 10b that is disposed in a direction crossing one side of the first damper pin 10a and in the third damper pin 10c that is disposed in a direction crossing an opposite side of the first damper pin 10a may contact opposite ends of the first damper pin 10a and the retainer plate 194.

As described above, when the cutaway recess portions 12a of the curved extending parts 12 formed in the second damper pin 10b and the third damper pin 10c contact the opposite ends of the first damper pin 10a and the retainer plate 194, a sealing effect for preventing leakage of combustion gas flowing between the platform 192 and the shank part 197 of the turbine blade 190 may be secured.

This is because the curved extending part 12 of the damper pin 10, an end of the first damper pin 10a, and an end of the retainer plate 194 contact each other to block a discharge passage of combustion gas, thereby acting as a flow resistance to the combustion gas.

In other words, because the first damper pin 10a and the retainer plate 194 contact the cutaway recess portions 12a formed in the curved extending parts 12 of the second damper pin 10b and the third damper pin 10c to secure sealing performance, they may act as a barrier that blocks a flow of combustion gas.

Accordingly, by installing the curved extending part 12 in the damper pin 10 that is installed in the turbine blade 190 to achieve a reduction effect of vibration energy due to friction, another effect of reducing a leakage amount of combustion gas with respect to the turbine blade 190 may be obtained.

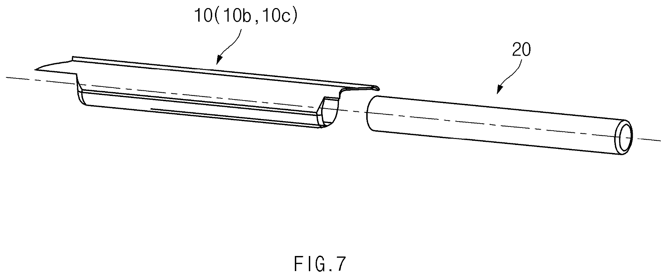

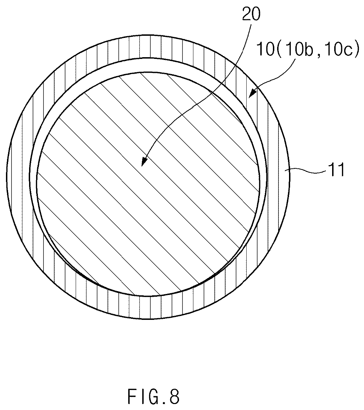

FIG. 7 is a perspective view illustrating a damper pin and an auxiliary damper pin according to an embodiment of the disclosure, and FIG. 8 is a cross-sectional view illustrating a state in which the auxiliary damper pin is inserted into the damper pin of an embodiment of the disclosure.

As illustrated in FIG. 7, an auxiliary damper pin 20 may be inserted into the hollow portion 11a of the body part 11 of the second damper pin 10b and the third damper pin 10c according to an embodiment of the disclosure in order to minimize a risk of leakage of combustion gas when at least one of the second damper pin 10b and the third damper pin 10c is damaged.

As illustrated in FIG. 8, when the auxiliary damper pin 20 is inserted into the damper pin 10 of at least one of the second damper pin 10b and the third damper pin 10c and is damaged due to a design error or a physical impact, the auxiliary damper pin 20 may be formed to be relatively smaller than an inner diameter of the hollow portion 11a of the second damper pin 10b and the third damper pin 10c so that a sequential damage impact is not transmitted to the auxiliary damper pin 20.

That is, when a clearance space is formed between a circumferential surface of the auxiliary damper pin 20 and an inner diameter of the hollow portion 11a of the second damper pin 10b and the third damper pin 10c, even if at least one of the second damper pin 10b and the third damper pin 10c is damaged, a risk of damage to the auxiliary damper pin 20 may be reduced, and leakage of combustion gas may be minimized due to installation of the auxiliary damper pin 20.

The auxiliary damper pin 20 may be formed in the same shape as the first damper pin 10a, but is not limited thereto and may be applied in various shapes capable of minimizing leakage of combustion gas.

According to the combustion gas leakage prevention device of a turbine blade and the gas turbine including the same according to the present disclosure having the configuration described above, curved extending parts are formed at opposite ends of the vertical damper pin among the transverse damper pin and the vertical damper pin formed along the circumferential surface of the shank part of the turbine blade and contact opposite ends of the transverse damper pin to achieve sealing, thereby not only reducing vibration response through contact with an adjacent turbine blade when vibration occurs but also minimizing leakage of combustion gas.

The above-mentioned description of the disclosure is intended to be illustrative, and it should be understood by those skilled in the art that the disclosure may be embodied in other specific forms without departing from the essential characteristics thereof. Therefore, the above-described embodiments are examples in all aspects, and should be construed not to be restrictive. The scope of the disclosure is defined by claims to be described below, and it should be interpreted that the scopes or claims of the disclosure and all modifications or changed forms derived from the equivalent concept are included in the scopes of the disclosure.

## Claims

1. A combustion gas leakage prevention device of a turbine blade, comprising:
a first damper pin disposed between a platform and a shank part of the turbine blade to extend lengthwise along an axial direction, and inserted into a pin slot;
a second damper pin and a third damper pin disposed below opposite sides of the first damper pin, respectively, and inserted into the pin slot; and
a damper side seal plate disposed below the second damper pin and the third damper pin,
wherein the second damper pin and the third damper pin each include:
a body part having a hollow portion; and
a curved extending part extending outward from circumferential surfaces of opposite ends of the body part, and
wherein the curved extending part includes a cutaway recess portion into which a contact end of the first damper pin at one side and a contact end of the damper side seal plate at an opposite side are inserted.

2. The combustion gas leakage prevention device of claim 1, wherein the body part includes at least one of: an annular cross-sectional shape perpendicular to a lengthwise direction; or a C-shaped cross-sectional shape having a cutaway portion formed along the lengthwise direction and perpendicular to the lengthwise direction.

3. The combustion gas leakage prevention device of claim 1 or 2, wherein the body part includes:
an upper curved portion contacting the turbine blade; and
a lower curved portion formed at one side of the upper curved portion and inserted into the pin slot.

4. The combustion gas leakage prevention device of any one of the preceding claims, wherein the curved extending part has an arc-shaped cross-sectional shape.

5. The combustion gas leakage prevention device of any one of the preceding claims, wherein the cutaway recess portion includes:
a first cutaway portion contacting vertical ends of the first damper pin and a retainer plate, and cut away in a direction corresponding to a lengthwise direction of the body part; and
a second cutaway portion contacting horizontal ends of the first damper pin and the retainer plate, and cut away in a direction crossing the direction corresponding to the lengthwise direction of the body part.

6. The combustion gas leakage prevention device of any one of the preceding claims, comprising:
an auxiliary damper pin inserted into a hollow portion of at least one of the second damper pin and the third damper pin,
wherein the auxiliary damper pin is formed smaller than an inner diameter of at least one of the second damper pin and the third damper pin.

7. The combustion gas leakage prevention device of any one of the preceding claims, wherein the second damper pin, the first damper pin, and the third damper pin are continuously arranged along a peripheral portion of the shank part,
wherein the first damper pin is disposed between the platform and the shank part to extend lengthwise in the axial direction, and
wherein the second damper pin and the third damper pin are disposed below opposite sides of the first damper pin in directions crossing each other.

8. A gas turbine comprising:
a compressor configured to suction and compress external air;
a combustor configured to mix fuel with the air compressed by the compressor and combust a mixture;
a turbine, in which turbine blades and turbine vanes are mounted in an interior of a turbine casing, the turbine blades being rotated by combustion gas discharged from the combustor,
a first damper pin disposed between a platform and a shank part of the turbine blade to extend lengthwise along an axial direction, and inserted into a pin slot;
a second damper pin and a third damper pin disposed below opposite sides of the first damper pin, and inserted into the pin slot; and
a retainer plate disposed below the second damper pin and the third damper pin,
wherein the second damper pin and the third damper pin each include:
a body part having a hollow portion; and
a curved extending part extending outward from circumferential surfaces of opposite ends of the body part, and
wherein the curved extending part includes a cutaway recess portion into which a contact end of the first damper pin at one side and a contact end of the retainer plate at an opposite side are inserted.

9. The gas turbine of claim 8, wherein the body part includes at least one of: an annular cross-sectional shape perpendicular to a lengthwise direction; or a C-shaped cross-sectional shape having a cutaway portion formed along the lengthwise direction and perpendicular to the lengthwise direction.

10. The gas turbine of claim 8 or 9, wherein the body part includes:
an upper curved portion contacting the turbine blade; and
a lower curved portion formed at one side of the upper curved portion and inserted into the pin slot.

11. The gas turbine of any one of the preceding claims 8-10, wherein the curved extending part has an arc-shaped cross-sectional shape.

12. The gas turbine of any one of the preceding claims 8-11, wherein the cutaway recess portion includes:
a first cutaway portion contacting vertical ends of the first damper pin and the retainer plate, and cut away in a direction corresponding to a lengthwise direction of the body part; and
a second cutaway portion contacting horizontal ends of the first damper pin and the retainer plate, and cut away in a direction crossing the direction corresponding to the lengthwise direction of the body part.

13. The gas turbine of any one of the preceding claims 8-12, comprising:
an auxiliary damper pin inserted into a hollow portion of at least one of the second damper pin and the third damper pin,
wherein the auxiliary damper pin is formed smaller than an inner diameter of at least one of the second damper pin and the third damper pin.

14. The gas turbine of any one of the preceding claims 8-13, wherein the second damper pin, the first damper pin, and the third damper pin are continuously arranged along a peripheral portion of the shank part,
wherein the first damper pin is disposed between the platform and the shank part to extend lengthwise in the axial direction, and
wherein the second damper pin and the third damper pin are disposed below opposite sides of the first damper pin in directions crossing each other.
